# EUROPEAN PATENT APPLICATION

(11) **EP 4 588 965 A1**
(43) Date of publication of application: **23.07.2025**
(21) Application number: 25153403.8
(22) Date of filing: 22.01.2025
(51) Int. Cl.: C08J 7/14, B05D 3/10

(54) **SULFONATED TREATMENT FOR A THERMOPLASTIC PART**

(30) Priority: 22.01.2024 US 202463623625 P
(71) Applicant: Rohr, Inc., Chula Vista, CA 91910-2098 (US)
(72) Inventor: SHEN, Shyan Bob, San Diego, 92126 (US); VAN TOOREN, Michael, San Diego, 92122 (US); URSENBACH, Daniel O., El Cajon, 92019 (US); CROSHAW, Chris, San Diego, 92110 (US); BORDAGE, Kevin R., Westfield, 01085 (US); SMITH, Blair A., South Windsor, 06074 (US); ORTEGA, Hannibelle, San Dimas, 91773 (US); PUJAR, Vijay V., San Diego, 92127 (US)
(74) Representative: Dehns

(57) **Abstract**

A method for applying a sulfonation treatment to a thermoplastic part includes forming a sulfonation barrier on the thermoplastic part by applying a sealant tape onto the thermoplastic part, applying a sulfonation fluid to a portion of a thermoplastic surface of the thermoplastic part to sulfonate the thermoplastic part at the thermoplastic surface, removing the sulfonation fluid from the portion of the thermoplastic surface, applying a neutralizing agent to the portion of the thermoplastic surface, washing the portion of the thermoplastic surface, and applying at least one coating to the portion of the thermoplastic surface.

## Description

### BACKGROUND

### 1. Technical Field

This disclosure relates generally to thermoplastic parts for aircraft and, more particularly, to methods for applying a sulfonation treatment to a thermoplastic part.

### 2. Background Information

Aircraft components, such as those forming aerostructure components (e.g., panels) of a fuselage, wings, propulsion system nacelles, interior parts, and other structural components of aircraft, increasingly include thermoplastic materials (e.g., thermoplastic composite materials). While these thermoplastic materials provide substantial benefits to aircraft weight and manufacturing costs, they can be resistant to coating by paint and other coating materials. Various processes are known in the art for improving the coating characteristics of thermoplastic parts. While these known processes have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a method for applying a sulfonation treatment to a thermoplastic part includes forming a sulfonation barrier on the thermoplastic part by applying a sealant tape onto the thermoplastic part, applying a sulfonation fluid to a portion of a thermoplastic surface of the thermoplastic part to sulfonate the thermoplastic part at the thermoplastic surface, removing the sulfonation fluid from the portion of the thermoplastic surface, applying a neutralizing agent to the portion of the thermoplastic surface, and washing the portion of the thermoplastic surface.

In any of the aspects or embodiments described above and herein, forming the sulfonation barrier on the thermoplastic part may include applying the sealant tape onto the thermoplastic surface, and the sulfonation barrier circumscribes the portion of the thermoplastic surface.

In any of the aspects or embodiments described above and herein, the sulfonation fluid may be a sulfonation gel. Applying the sulfonation fluid to the portion of the thermoplastic surface may include applying the sulfonation gel to the thermoplastic surface within the sulfonation barrier.

In any of the aspects or embodiments described above and herein, the step of applying the sulfonation gel to the thermoplastic surface within the sulfonation barrier may be performed with the thermoplastic part installed on an aircraft.

In any of the aspects or embodiments described above and herein, the sulfonation gel may include 1 percent to 6 percent fumed silica, by mass, and 90 percent to 97 percent sulfuric acid, by mass.

In any of the aspects or embodiments described above and herein, the sulfonation gel may include 2.5 percent to 3.5 percent fumed silica, by mass, and 90 percent to 95.5 percent sulfuric acid, by mass.

In any of the aspects or embodiments described above and herein, the method may further include cleaning the thermoplastic surface, prior to forming the sulfonation barrier on the thermoplastic surface, by stripping a preexisting coating from the thermoplastic surface.

In any of the aspects or embodiments described above and herein, forming the sulfonation barrier on the thermoplastic surface may further include adhering a barrier film to the sealant tape to form the sulfonation barrier sealing a portion of the thermoplastic part within the sealant tape and the barrier film.

In any of the aspects or embodiments described above and herein, the barrier film may be a polyimide film.

In any of the aspects or embodiments described above and herein, applying the sulfonation fluid to the portion of the thermoplastic surface may include exposing the thermoplastic part to a sulfonation gas or a sulfonation liquid within a sulfonation chamber.

In any of the aspects or embodiments described above and herein, the thermoplastic part may include at least one metal component. The method may further include applying a sealant tape onto the at least one metal component prior to applying the sulfonation fluid to the portion of the thermoplastic surface.

In any of the aspects or embodiments described above and herein, the thermoplastic part may include a polyether ether ketone (PEEK), a poly ether ketone ketone (PEKK), or a poly aryl ether ketone (PAEK) thermoplastic matrix material.

According to another aspect of the present disclosure, which the Applicant expressly reserves the right to claim independently, a method for applying a sulfonation treatment to a thermoplastic part installed on an aircraft includes applying a sulfonation gel to a thermoplastic surface of the thermoplastic part only at a treatment portion of the thermoplastic surface;, removing the sulfonation gel from the treatment portion, applying a neutralizing agent to the treatment portion, washing the treatment portion, and applying at least one coating to the treatment portion.

In any of the aspects or embodiments described above and herein, the method may further include preparing the sulfonation gel by adding concentrated sulfuric acid to fumed silica such that the sulfonation gel includes sulfonation gel includes 1 percent to 6 percent fumed silica, by mass, and 90 percent to 97 percent sulfuric acid, by mass.

In any of the aspects or embodiments described above and herein, the method may further include preparing the sulfonation gel by adding fuming sulfuric acid to fumed silica such that the sulfonation gel includes sulfonation gel includes 1 percent to 6 percent fumed silica, by mass, and 90 percent to 97 percent sulfuric acid, by mass, and the fuming sulfuric acid is between 5 percent and 30 percent sulfur trioxide, by mass.

In any of the aspects or embodiments described above and herein, forming a sulfonation barrier on the thermoplastic surface, prior to applying the sulfonation gel to the treatment portion, by applying a sealant tape onto the thermoplastic surface to surround the treatment portion of the thermoplastic surface, and the sealant tape forms a periphery of the treatment portion.

According to an aspect of the present disclosure, which the Applicant expressly reserves the right to claim independently, a method for applying a sulfonation treatment to a thermoplastic part installed on an aircraft includes applying a sulfonation gel to at least a portion of a thermoplastic surface of the thermoplastic part. The sulfonation gel includes 2.5 percent to 3.5 percent fumed silica, by mass. The method further includes removing the sulfonation gel from the thermoplastic surface, applying a neutralizing agent to the at least a portion of the thermoplastic surface, washing the at least a portion of the thermoplastic surface, and applying at least one coating to the at least a portion of the thermoplastic surface.

In any of the aspects or embodiments described above and herein, applying the sulfonation gel to the at least a portion of the thermoplastic surface may include applying the sulfonation gel to the portion of the thermoplastic surface for a duration to increase a sulfur content of the thermoplastic part at the at least a portion of the thermoplastic surface to have an infrared spectrum detectable amount of a sulfone group (O=S=O) with a peak wavenumber between 1,000 cm⁻¹ and 1,098 cm⁻¹.

In any of the aspects or embodiments described above and herein, applying the sulfonation gel to the at least a portion of the thermoplastic surface may include applying the sulfonation gel to the portion of the thermoplastic surface for the duration to increase a sulfur content of the thermoplastic part at the at least a portion of the thermoplastic surface to have the infrared spectrum detectable amount of the sulfone group (O=S=O) with the peak wavenumber between 1,025 cm⁻¹ and 1,050 cm⁻¹.

In any of the aspects or embodiments described above and herein, the method may further include cleaning the thermoplastic surface, prior to applying the sulfonation gel to the at least a portion of the thermoplastic surface, by stripping a preexisting coating from the thermoplastic surface.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of an aircraft, in accordance with one or more embodiments of the present disclosure.
FIG. 2 illustrates a flow chart depicting a method for applying a sulfonation treatment to an aerostructure part, in accordance with one or more embodiments of the present disclosure.
FIG. 3 schematically illustrates a portion of a thermoplastic part, in accordance with one or more embodiments of the present disclosure.
FIG. 4 illustrates a flow chart depicting another method for applying a sulfonation treatment to an aerostructure part, in accordance with one or more embodiments of the present disclosure.
FIG. 5 schematically illustrates a portion of a thermoplastic part, in accordance with one or more embodiments of the present disclosure.
FIG. 6 schematically illustrates the thermoplastic part for a sequence of sulfonation treatment steps, in accordance with one or more embodiments of the present disclosure.

### DETAILED DESCRIPTION

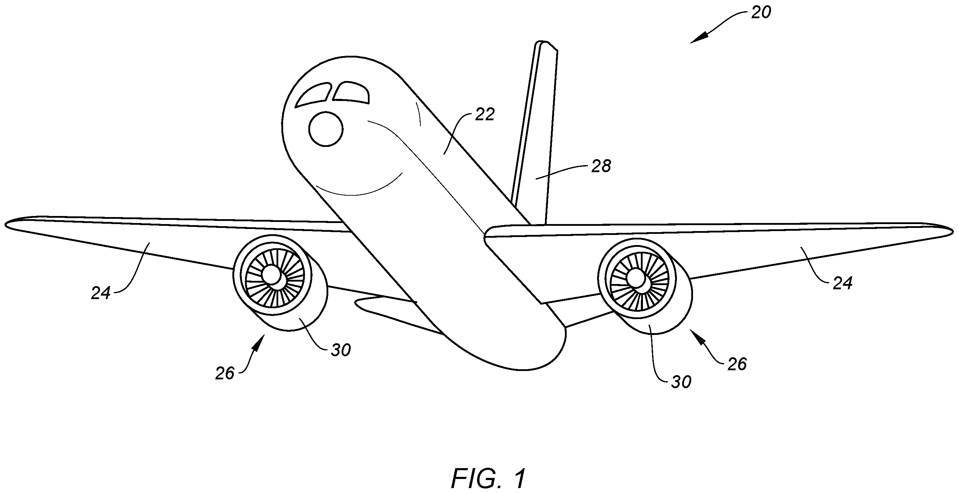

FIG. 1 illustrates an aircraft 20 such as an airplane (e.g., a fixed-wing aircraft). The aircraft 20 of FIG. 1 includes a fuselage 22, wings 24, propulsion systems 26, and a tail assembly 28. The wings 24 extend outward from the fuselage 22. Each of the propulsion systems 26 is mounted on a respective one of the wings 24. The tail assembly 28 is disposed at an aft end of the fuselage 22. The present disclosure, however, is not limited to the foregoing exemplary aircraft 20 configuration, and the aircraft 20 may alternatively be a rotary-wing aircraft (e.g., a helicopter), a tilt-rotor aircraft, a tilt-wing aircraft, a propeller-driven aircraft, or another aerial vehicle. Moreover, the aircraft 20 may be a manned aerial vehicle or an unmanned aerial vehicle (UAV, e.g., a drone, a satellite, etc.)

The propulsion systems 26 of FIG. 1 are configured as a turbofan gas turbine engine propulsion system. However, it should be understood that aspects of the present disclosure may be equally applicable to other configurations of propulsion system or gas turbine engine configurations. Each of the propulsion systems 26 of FIG. 1 includes a nacelle 30 configured to house and provide an exterior aerodynamic cover for the respective one of the propulsion systems 26.

Aircraft parts, such as those forming all or portions of the fuselage 22, the wings 24, the tail assembly 28, the nacelle 30, or other aerostructures of the aircraft 20 may be selected to provide suitable structural strength, rigidity, and impact resistance while also minimizing weight. Other examples of aircraft parts may include ducts, water collectors, brake rods, electronic boxes, heat sinks, piping, interior structures (e.g., lavatory surfaces, galley surfaces, tray tables, seat frames, etc.), electrical connector components, and the like. Thermoplastic materials (e.g., thermoplastic composite materials) may be used for aircraft parts, such as those described above, in order to reduce aircraft weight and manufacturing costs, for example, in comparison to conventional metal (e.g., aluminum) and thermoset materials. However, thermoplastic parts tend to exhibit low surface energy, thereby contribution to poor adhesion of paint, metal plating, lightning strike protection layers, bonding agents (e.g., adhesives), and other coatings (hereinafter collectively "TP coatings") to surfaces of the thermoplastic parts. These poor adhesion characteristics of thermoplastic parts can, in some cases, degrade the effectiveness of lightning strike protection layers, accelerate cracking and/or peeling of paint or other surface coatings, and/or prevent suitable bonding between aerostructure components.

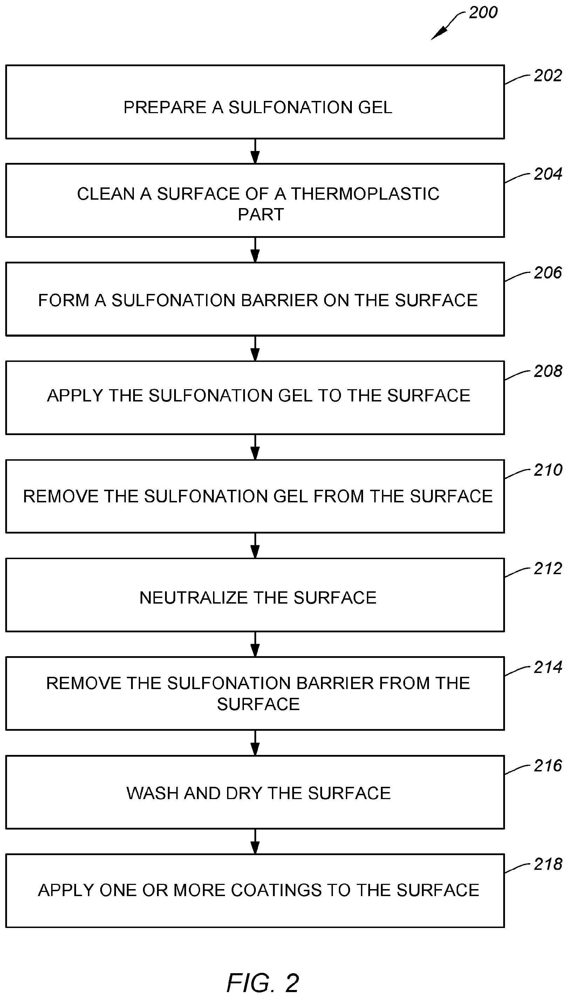

Referring to FIG. 2, a Method 200 for applying a sulfonation treatment to an aerostructure part is provided. FIG. 2 illustrates a flowchart for the Method 200. Unless otherwise noted herein, it should be understood that the steps of Method 200 are not required to be performed in the specific sequence in which they are discussed below and, in some embodiments, the steps of Method 200 may be performed separately or simultaneously. Further, it should be understood that not all of the steps of the Method 200, discussed below, may be required unless otherwise described herein.

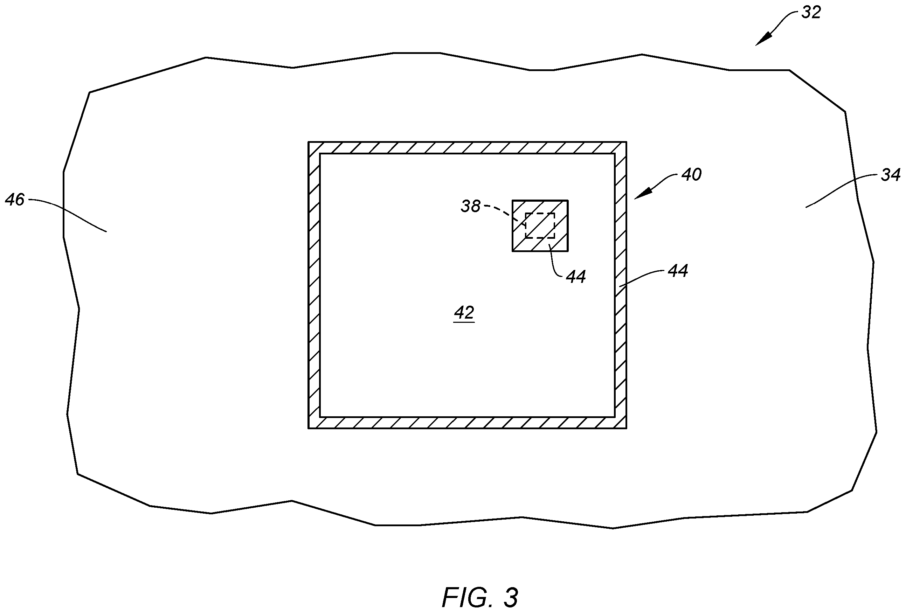

FIG. 3 illustrates a portion of a thermoplastic part 32 which may be treated in accordance with the Method 200 of the present disclosure. The thermoplastic part 32 is configured as a panel which may form an exterior surface or skin for a portion of the fuselage 22, the wings 24, the tail assembly 28, the nacelle 30, or another aerostructure of the aircraft 20 (see FIG. 1). The thermoplastic part 32 may additionally or alternatively form a portion (e.g., a face skin) for an acoustic panel. While the Method 200 will be described herein with respect to the thermoplastic part 32, it should be understood that the present disclosure is not limited to the application of sulfonation treatments for the foregoing exemplary thermoplastic part 32. For example, the aspects of the present disclosure Method 200 may also be applicable for sulfonation treatment of aerostructure panels and other parts which do not include a thermoplastic material (e.g., thermoset and other non-metallic aerostructure component materials) to improve surface bonding characteristics.

Thermoplastic parts, such as the thermoplastic part 32, may include a thermoplastic matrix material and a composite reinforcement material. Examples of the thermoplastic matrix material include polyamide (PA), polyamide-imide (PAI), polyarylsulfone (PAS), polyethersulfone (PES), polyoxymethylene (POM), polyphenylene sulfide (PPS), polyether ether ketone (PEEK), polyetherimide (PEI), polyphthalamide (PPA), poly ether ketone ketone (PEKK), or poly aryl ether ketone (PAEK), or the like, or any combination thereof. Examples of the composite reinforcement material include glass fibers, carbon fibers, aramid fibers, basalt fibers, mineral fibers, fibers from renewable raw materials, metal fibers, or polymer fibers, or the like, or any combination thereof. The present disclosure is not limited to the foregoing exemplary thermoplastic material materials and composite reinforcement materials. Thermoplastic parts very often include a plurality of composite reinforcement layers. The reinforcement fibers in each layer may have a fiber direction (e.g., all fibers in a layer may be oriented in the same direction). In some instances, a thermoplastic part including a plurality of composite reinforcement layers will have different fiber layers with different fiber directions. For example, a first layer may have fibers oriented in a first direction and a second layer may have fibers oriented in a second direction that is perpendicular to the first direction, or at opposing fortyfive degree angles, or at opposing thirty degree angles, and the like.

The thermoplastic part 32 (see FIG. 3) may form a portion of the aircraft 20 (see FIG. 1). In other words, the thermoplastic part 32 may be a portion of (e.g., installed on) the fuselage 22, the wings 24, the tail assembly 28, the nacelle 30, or another aerostructure of the aircraft 20 (see FIG. 1). The thermoplastic part 32 includes a thermoplastic surface 34. The thermoplastic surface 34 (or a TP coating disposed thereon) may form an exterior surface or exposed aerodynamic surface of all or a portion of the fuselage 22, the wings 24, the tail assembly 28, the nacelle 30, or another aerostructure of the aircraft 20 (see FIG. 1). Alternatively, the thermoplastic part 32 may be a discrete component independent of the aircraft 20, and the thermoplastic part 32 may subsequently be installed on the aircraft 20 or the propulsion system 26 (e.g., the nacelle 30). The thermoplastic part 32 may include one or more TP coatings disposed on the thermoplastic surface 34. All or a portion of the TP coatings may be in a degraded condition (e.g., worn, chipped, peeling, scratched, discolored, missing, or otherwise degraded). Alternatively, the thermoplastic surface 34 may be uncoated. The thermoplastic part 32 may additionally include one or more metal components 38 at (e.g., on, adjacent, or proximate) the thermoplastic surface 34 such as, but not limited to, mechanical fasteners, inserts cowl latch components, hinges, aerostructure leading edges (e.g., nacelle inlet lip skins), acoustic cores (e.g., honeycomb cores) or the like.

Step 202 includes, optionally, preparing a sulfonation gel for the thermoplastic part 32. In one example, the sulfonation gel may be prepared by adding concentrated sulfuric acid (H₂SO₄) in fumed silica. Suitable fumed silicas may include those sold under the CAB-O-SIL trademark (Cabot Corp. of Boston, MA). The concentrated sulfuric acid may be between approximately 96 percent and approximately 98 percent sulfuric acid, by mass. The concentrated sulfuric acid may be added to and mixed with the fumed silica to form a mixture having approximately 1 percent to approximately 6 percent, by mass, of fumed silica and approximately 90 percent to approximately 97 percent, by mass, of sulfuric acid or, more preferably, approximately 2.5 percent to approximately 3.5 percent, by mass, of fumed silica and approximately 90 percent to approximately 95.5 percent sulfuric acid, to obtain suitable non-drip thixotropic characteristics of the resultant sulfonation gel. The sulfonation gel may include water forming the balance of the mixture. The concentrated sulfuric acid sulfonation gel may be stored for future use. In another example, the sulfonation gel may be prepared by adding fuming sulfuric acid (SO₃H₂SO₄) drop-by-drop in the fumed silica. The fuming sulfuric acid may have between approximately 5 percent and approximately 30 percent by mass of sulfur trioxide (SO₃). The fuming sulfuric acid may be added to and mixed with the fumed silica to form a mixture having approximately 1 percent to approximately 6 percent, by mass, of fumed silica and approximately 90 percent to approximately 97 percent, by mass, of sulfuric acid or, more preferably, approximately 2.5 percent to approximately 3.5 percent, by mass, of fumed silica and approximately 90 percent to approximately 95.5 percent sulfuric acid, to obtain suitable non-drip thixotropic characteristics of the resultant sulfonation gel. The sulfonation gel may include water forming the balance of the mixture. The fuming sulfuric acid sulfonation gel may typically be prepared in situ to limit decomposition of the fuming sulfuric acid sulfonation gel prior to application to the thermoplastic part 32.

Step 204 includes, optionally, cleaning the thermoplastic surface 34 to remove any dirt, debris, oils, or other contaminants from the thermoplastic surface 34. Cleaning the thermoplastic surface 34 may additionally include stripping all or a portion of the TP coating from the thermoplastic surface 34 to form an exposed portion of the thermoplastic surface 34. The thermoplastic surface 34 may be cleaned, for example, using methyl ethyl ketone (also known as "butanone"), acetone, isopropyl alcohol, ethyl acetate, toluene, methyl isobutyl, or another suitable solvent, including aqueous varieties.

Step 206 includes, optionally, forming a sulfonation barrier 40 on the thermoplastic surface 34, for example, subsequent to cleaning the thermoplastic surface 34. For example, Step 206 may include forming the sulfonation barrier 40 to surround a treatment portion 42 of the thermoplastic surface 34, which treatment portion 42 will be exposed to the sulfonation gel. As shown, for example, in FIG. 3, the sulfonation barrier 40 may be formed by applying one or more layers of a sealant tape 44 onto the thermoplastic surface 34 surrounding (e.g., circumscribing) or otherwise at (e.g., on, adjacent, or proximate) the treatment portion 42 such that the sulfonation barrier 40 forms a periphery of the treatment portion 42. The sealant tape 44 may include an elastomer (e.g., synthetic rubber) being resistant to sulfuric acid. For example, the sealant tape 44 may be a high-temperature composite vacuum-bag sealant tape such as, but not limited to, GS^{®} A-800-3G sealant sold by General Sealants, Inc. (City of Industry, CA). The sulfonation barrier 40 formed by the sealant tape 44 may separate the treatment portion 42 from an untreated portion 46 of the thermoplastic surface 34 and/or from other components, surfaces, or features of the aircraft 20 and its aerostructure components (see FIG. 1). The sealant tape 44 may additionally be applied to the thermoplastic part 32 to cover any of the metal components 38 which may be disposed at (e.g., on, adjacent, or proximate) or within the treatment portion 42 to protect the metal components 38 from corrosion by the sulfonation gel. Additionally or alternatively, other protective materials such as, but not limited to, plastic, rubber, and/or wax, may be used to protect the metal components 38.

Step 208 includes applying a sulfonation fluid onto the treatment portion 42 of the thermoplastic surface 34, and the sulfonation fluid is the sulfonation gel (see Step 202). The sulfonation gel may be mixed prior to (e.g., immediately prior to) application onto the treatment portion 42 to reduce the viscosity of the sulfonation gel. The sulfonation gel may be applied to the treatment portion 42 to form a layer of the sulfonation gel on the treatment portion. The sulfonation gel layer may have a thickness of approximate 1 millimeter (mm) to approximately 4 mm on the treatment portion 42 of the thermoplastic surface 34, for example, to facilitate sufficient and uniform activation of the thermoplastic material at (e.g., on, adjacent, or proximate) the thermoplastic surface 34. The duration for which the sulfonation gel is applied to the treatment portion 42 may be selected, for example, based on a material (e.g., a thermoplastic matrix material) of the thermoplastic part 32, a sulfuric acid concentration of the sulfonation gel, and/or an anticipated amount of time between the sulfonation treatment and a subsequent coating process for the treatment portion 42. For example, the duration for which the sulfonation gel is applied to the treatment portion 42 may be between approximately 5 minutes and approximately 60 minutes. Application of the sulfonating gel to the thermoplastic part 32 introduces the sulfone group (O=S=O) into the polymer chains of the thermoplastic part 32 (e.g., the thermoplastic matrix material) at (e.g., on, adjacent, or proximate) the thermoplastic surface 34, thereby changing the properties (e.g., a higher surface energy and a lower static contact angle) of the thermoplastic part 32 at (e.g., on, adjacent, or proximate) the thermoplastic surface 34. For example, the thermoplastic part 32 may have a sulfur content with an infrared spectrum detectable amount of the sulfone group (O=S=O) with a peak wavenumber in the region between approximately 1,000 cm⁻¹ and approximately 1,098 cm⁻¹ and, more preferably, between approximately 1,025 cm⁻¹ and approximately 1,050 cm⁻¹ with a peak intensity higher than approximately 0.002 absorbance (or higher than approximately 0.2 percent reflectance) using, for example, an attenuated total reflectance (ATR) technique at (e.g., on, adjacent, or proximate) the thermoplastic surface 34. Of course, a suitable sulfone group content of the thermoplastic part 32 at (e.g., on, adjacent, or proximate) the thermoplastic surface 34 will depend on a number of factors such as, but not limited to, the particular thermoplastic matrix material of the thermoplastic part 32, a surface roughness of the thermoplastic surface 34, and a material of the TP coating to be subsequently applied to the thermoplastic surface 34.

Step 210 includes removing all or a substantial portion of the sulfonation gel from the treatment portion 42, for example, by wiping the sulfonation gel with a cloth, a sponge, or another suitable absorbent material. Step 212 includes neutralizing the treatment portion 42 with a neutralizing fluid, subsequent to removing the sulfonation gel from the treatment portion 42, to remove excess acid from the thermoplastic surface 34 and to stabilize the modified thermoplastic matrix material, for example, with a pH value approximately between 7 and 9. The neutralizing fluid may include, for example, an aqueous solution of a neutralizing agent (e.g., a buffering agent) such as, but not limited to, sodium hydroxide (NaOH), potassium hydroxide (KOH), calcium carbonate (CaCOs), magnesium oxide (MgO), sodium carbonate (Na₂CO₃), sodium bicarbonate (NaHCOs), calcium hydroxide (Ca(OH)₂), amines, or another suitable base.

Step 214 includes removing the sulfonation barrier 40 (e.g., the sealant tape 44) from the thermoplastic surface 34 subsequent to neutralizing the treatment portion 42 (see Step 210). Step 216 includes washing (e.g., with water) the thermoplastic surface 34 (e.g., the treatment portion 42), to remove any remaining impurities or residues from the sulfonation process, and drying the thermoplastic surface 34 to remove excess moisture. Step 218 includes applying at least one coating (e.g., primer, topcoat, paint, metal plating, lightning strike protection layers, bonding agents, and/or other coatings) to the thermoplastic surface 34 (e.g., the treatment portion 42). The present disclosure is not limited to any particular coating or coating process.

In one experimental example, 7-inch by 4-inch by 0.09-inch (177.8 mm by 101.6 mm by 2.29 mm) carbon-fiber-reinforced PEEK thermoplastic matrix material (CETEX^{®} TC1200 sold by Toray Advanced Composites Netherlands B.V., Netherlands) panels, were treated with a sulfonation gel having 2.5 percent, by mass, fumed silica and 96 percent, by mass, sulfuric acid. The panels were bonded together with an adhesive coating (LOCTITE^{®} EA9394 adhesive sold by Henkel IP & Holding GMBH, Germany). The bonded panels were tested in accordance with ASTM D1002, and a lap shear strength of 1656 psi (11.42 MPa) was measured for the bonded panels. In contrast, control coupon panels of the same carbon-fiber-reinforced PEEK thermoplastic matrix material received a sanding treatment to improve the surface bonding characteristics of the control coupon panels. The control coupon panels were bonded together with the adhesive coating (LOCTITE^{®} EA9394 adhesive sold by Henkel IP & Holding GMBH, Germany). The control coupon panels were tested in accordance with ASTM D1002, and a lap shear strength of 1277 psi (8.805 MPa) was measured for the bonded panels. Accordingly, the panels receiving the gel sulfonation treatment of the present disclosure demonstrated an adhesion improvement of nearly 30 percent relative to a conventional sanding process.

The gel sulfonation treatment of the present disclosure facilitates treatment of aircraft thermoplastic parts having complex three-dimensional curvatures and/or vertical or substantially vertical surfaces without size limitation (e.g., without having to fit the thermoplastic part into a sulfonation tank or chamber). Accordingly, the present disclosure gel sulfonation treatment may be performed in the field for repair, repainting, or the like without the need for large, expensive, or complex gas or liquid sulfonation equipment. Moreover, the gel sulfonation treatment of the present disclosure may be applied to thermoplastic parts of the aircraft without requiring removal from the aircraft or its propulsion systems. The gel sulfonation treatment of the present disclosure facilitates improved surface energy and wettability characteristics of the treated thermoplastic parts, thereby improving the adhesion of paint, metal plating, lightning strike protection layers, bonding agents, and/or other coatings. For example, the gel sulfonation treatment of the present disclosure may reduce the static contact angle of treated surfaces of thermoplastic parts to 30 degrees or less.

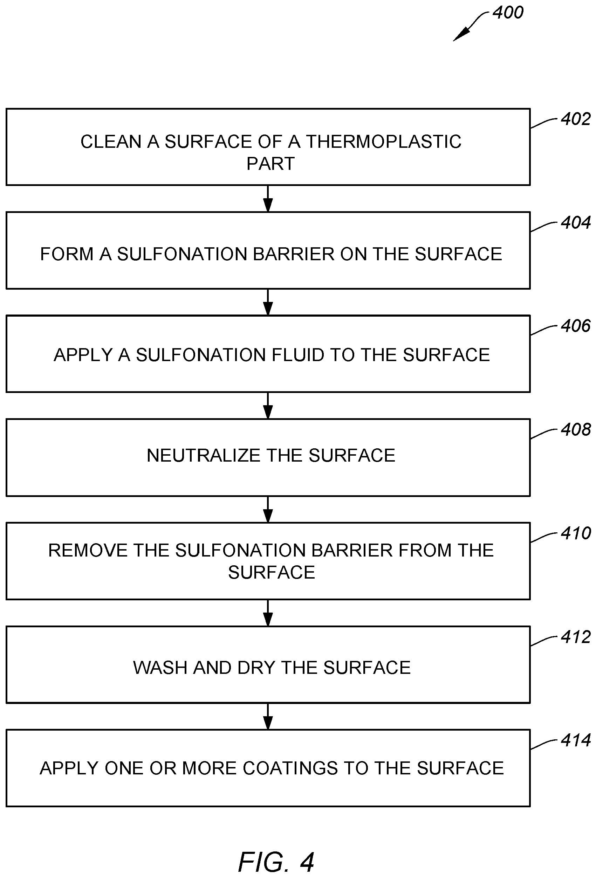

Referring to FIG. 4, another Method 400 for applying a sulfonation treatment to an aerostructure part is provided. FIG. 4 illustrates a flowchart for the Method 400. Unless otherwise noted herein, it should be understood that the steps of Method 400 are not required to be performed in the specific sequence in which they are discussed below and, in some embodiments, the steps of Method 400 may be performed separately or simultaneously. Further, it should be understood that not all of the steps of the Method 400, discussed below, may be required unless otherwise described herein.

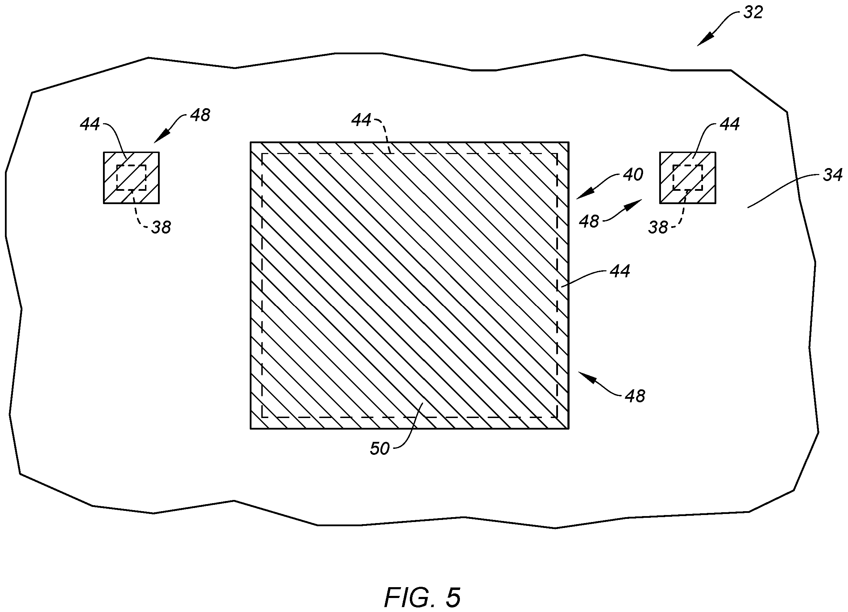

FIG. 5 illustrates a portion of a thermoplastic part 32 which may be treated in accordance with the Method 400 of the present disclosure. The thermoplastic part 32 is configured as a panel which may form an exterior surface or skin for a portion of the fuselage 22, the wings 24, the tail assembly 28, the nacelle 30, or another aerostructure of the aircraft 20 (see FIG. 1). The thermoplastic part 32 may additionally or alternatively form a portion (e.g., a face skin) for an acoustic panel. While the Method 400 will be described herein with respect to the thermoplastic part 32, it should be understood that the present disclosure is not limited to the application of sulfonation treatments for the foregoing exemplary thermoplastic part 32. For example, the aspects of the present disclosure Method 400 may also be applicable for sulfonation treatment of aerostructure panels and other parts which do not include a thermoplastic material (e.g., thermoset and other non-metallic aerostructure component materials) to improve surface bonding characteristics.

Step 402 includes cleaning the thermoplastic surface 34 to remove any dirt, debris, oils, or other contaminants from the thermoplastic surface 34. Cleaning the thermoplastic surface 34 may additionally include stripping all or a portion of the TP coating from the thermoplastic surface 34 to form an exposed portion of the thermoplastic surface 34. The thermoplastic surface 34 may be cleaned, for example, using methyl ethyl ketone (also known as "butanone"), acetone, isopropyl alcohol, ethyl acetate, toluene, methyl isobutyl, or another suitable solvent, including aqueous varieties.

Step 404 includes protecting portions of the thermoplastic part 32 which may be sensitive to (e.g., degraded by) exposure to the corrosive sulfonation liquid or sulfonation gas during a sulfonation treatment. For example, Step 404 may include protecting the metal components 38 of the thermoplastic part 32. To protect larger portions of the thermoplastic part 32, a sulfonation barrier 48 may be formed on the thermoplastic part 32. The sulfonation barrier 48 may be formed, for example, by applying the sealant tape 44 onto the thermoplastic surface 34 surrounding a portion of the thermoplastic part 32 (e.g., one or more of the metal components 38) to be protected. The sealant tape 44 may have an adhesive on both sides of the sealant tape 44 (e.g., the side disposed on the thermoplastic surface 34 and the side facing away from the thermoplastic surface 34). A barrier film 50 may be applied onto the sealant tape 44 (e.g., adhered to the sealant tape) to isolate (e.g., seal) a portion of the thermoplastic part 32 from the surrounding environment with the sealant tape 44 and the barrier film 50. The barrier film 50 may be a polyimide film such as that sold under the KAPTON trademark (DuPont Electronics, Inc. of Boston, MA). The barrier film 50 may alternatively be a polytetrafluoroethylene (PTFE) film or another suitable sulfuric-acid-resistant material film including polymer films free of per-and polyfluoroalkyl substances (PFAS). To protect metal components 38 (e.g., metallic inserts) of the thermoplastic part 32, the sealant tape 44 may additionally be directly applied to the metal components 38.

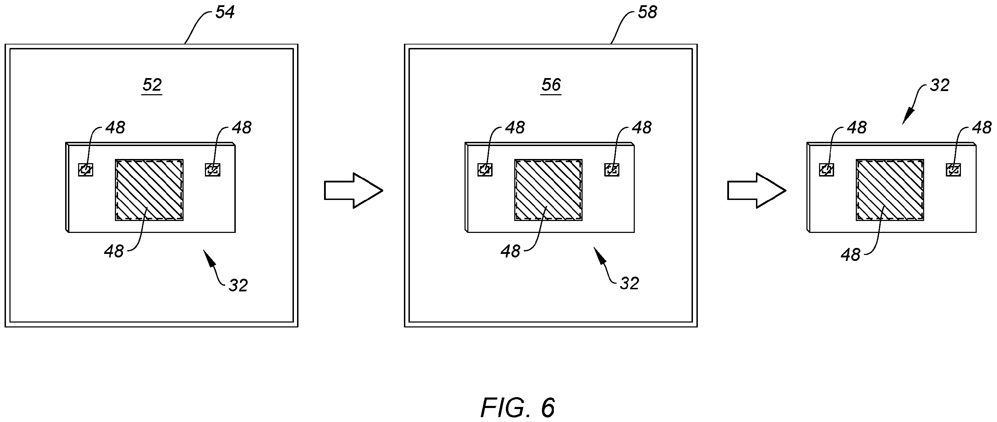

Referring to FIG. 6, Step 406 includes applying a sulfonation fluid 52 to the thermoplastic part 32. The thermoplastic part 32 (e.g., the entire thermoplastic part 32) may be positioned within a chamber 54 (e.g., a fully or partially enclosed tank) and exposed to the sulfonating fluid 52 to sulfonate exposed portions (e.g., unprotected by one or more of the sulfonation barriers 48) of the thermoplastic part 32. The sulfonation fluid 52 may be a gas or liquid as discussed below. The present disclosure is not limited to any particular gas or liquid sulfonating process, and the thermoplastic part 32 may be sulfonated using any conventional gas or liquid sulfonating process conventionally known in the art. Application of the sulfonating fluid 52 to the thermoplastic part 32 introduces the sulfone group (O=S=O) into the polymer chains of the thermoplastic part 32 (e.g., the thermoplastic matrix material) at (e.g., on, adjacent, or proximate) the thermoplastic surface 34, thereby changing the properties (e.g., a higher surface energy and a lower static contact angle) of the thermoplastic part 32 at (e.g., on, adjacent, or proximate) the thermoplastic surface 34. For example, the thermoplastic part 32 may have a sulfur content with an infrared spectrum detectable amount of the sulfone group (O=S=O) with a peak wavenumber in the region between approximately 1,000 cm⁻¹ and approximately 1,098 cm⁻¹ and, more preferably, between approximately 1,025 cm⁻¹ and approximately 1,050 cm⁻¹ with a peak intensity higher than approximately 0.002 absorbance (or higher than approximately 0.2 percent reflectance) using, for example, an attenuated total reflectance (ATR) technique at (e.g., on, adjacent, or proximate) the thermoplastic surface 34. Of course, a suitable sulfone group content of the thermoplastic part 32 at (e.g., on, adjacent, or proximate) the thermoplastic surface 34 will depend on a number of factors such as, but not limited to, the particular thermoplastic matrix material of the thermoplastic part 32, a surface roughness of the thermoplastic surface 34, and a material of the TP coating to be subsequently applied to the thermoplastic surface 34.

For gas-phase sulfonation of the thermoplastic part 32, the thermoplastic part 32 is exposed to the gaseous sulfonation fluid 52 within the chamber 54. The gaseous sulfonation fluid 52 includes sulfur trioxide (SO₃), sulfur dioxide (SO₂), or a combination of sulfur trioxide (SO₃) and sulfur dioxide (SO₂). The gaseous sulfonation fluid 52 additionally includes a gas which is nonreactive with the sulfur trioxide (SO₃) and/or the sulfur dioxide (SO₂) such as, but not limited to, air or nitrogen. For example, the sulfonating gas may include between approximately 0.05 percent and approximately 2 percent sulfur trioxide (SO₃), sulfur dioxide (SO₂), or a combination of sulfur trioxide (SO₃) and sulfur dioxide (SO₂), by volume, in approximately 95 percent to approximately 99.5 percent nitrogen, by volume. A duration for which thermoplastic part 32 is exposed to the gaseous sulfonation fluid 52 within the chamber 54 may be between approximately 20 seconds and approximately 60 minutes.

For liquid-phase sulfonation of the thermoplastic part 32, the thermoplastic part 32 is exposed to the liquid sulfonation fluid 52 within the chamber 54. The liquid sulfonation fluid 52 includes sulfuric acid (H₂SO₄) or fuming sulfuric acid (SO₃H₂SO₄). The liquid sulfonation fluid 52 may have a sulfur trioxide (SO₃) content of between approximately 5 percent and approximately 30 percent, by mass. A duration for which thermoplastic part 32 is exposed to the liquid sulfonation fluid 52 within the chamber 54 may be between approximately 1 minute and approximately 60 minutes.

Step 408 includes applying a neutralizing fluid 56 to the thermoplastic part 32, subsequent to applying the sulfonation fluid 52 to the thermoplastic part 32 (see Step 406) and removing the sulfonation fluid 52 from the thermoplastic surface 34 (e.g., by removing the thermoplastic part 32 from the chamber 54). The thermoplastic part 32 (e.g., the entire thermoplastic part 32) may be positioned within a chamber 58 (e.g., a fully or partially enclosed tank) and exposed to the neutralizing fluid 56 to remove excess acid from the thermoplastic surface 34 and to stabilize the modified thermoplastic matrix material, for example, with a pH value approximately between 7 and 9. Alternatively, the thermoplastic part 32 may be sequentially exposed to the sulfonation fluid 52 and the neutralizing fluid 56 within a same chamber (e.g., the chamber 54). The neutralizing fluid may include, for example, an aqueous solution of a neutralizing agent (e.g., a buffering agent) such as, but not limited to, sodium hydroxide (NaOH), potassium hydroxide (KOH), calcium carbonate (CaCOs), magnesium oxide (MgO), sodium carbonate (Na₂CO₃), sodium bicarbonate (NaHCOs), or calcium hydroxide (Ca(OH)₂), amines, or another suitable base.

Step 410 includes removing the one or more sulfonation barriers 48 and the sealant tape 44 from the thermoplastic part 32. Step 412 includes washing (e.g., with water) the thermoplastic surface 34 (e.g., the treatment portion 42), to remove any remaining impurities or residues from the sulfonation process, and drying the thermoplastic surface 34 to remove excess moisture. Step 414 includes applying at least one coating (e.g., paint, metal plating, lightning strike protection layers, bonding agents, and/or other coatings) to the thermoplastic surface 34 (e.g., the treatment portion 42). The present disclosure is not limited to any particular coating or coating process.

The sulfonation treatment of the present disclosure may be applied on the thermoplastic parts with thermoplastic matrix material including polyamide (PA), polyamide-imide (PAI), polyarylsulfone (PAS), polyethersulfone (PES), polyoxymethylene (POM), polyphenylene sulfide (PPS), polyether ether ketone (PEEK), polyetherimide (PEI), polyphthalamide (PPA), poly ether ketone ketone (PEKK), or poly aryl ether ketone (PAEK), or the like, or any combination thereof. However, some thermoplastic matrix materials have higher resistance to sulfonation and may need longer treatment time and/or higher treatment temperatures such as, for example, polyphenylene sulfide (PPS) and polyetherimide (PEI).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for applying a sulfonation treatment to a thermoplastic part (32), the method comprising:
forming a sulfonation barrier (40; 48) on the thermoplastic part (32) by applying a sealant tape (44) onto the thermoplastic part (32);
applying a sulfonation fluid (52) to a portion (42) of the thermoplastic surface (34) to sulfonate the thermoplastic part (32) at the thermoplastic surface (34);
removing the sulfonation fluid (52) from the portion (42) of the thermoplastic surface (34);
applying a neutralizing agent (56) to the portion (42) of the thermoplastic surface (34); and
washing the portion (42) of the thermoplastic surface (34).

2. The method of claim 1, wherein forming the sulfonation barrier (40; 48) on the thermoplastic part (32) includes applying the sealant tape (44) onto the thermoplastic surface (34), and the sulfonation barrier (40; 48) circumscribes the portion (42) of the thermoplastic surface (34).

3. The method of claim 2, wherein the sulfonation fluid (52) is a sulfonation gel (52), and applying the sulfonation fluid (52) to the portion (42) of the thermoplastic surface (34) includes applying the sulfonation gel (52) to the thermoplastic surface (34) within the sulfonation barrier (40; 48).

4. The method of claim 3, wherein the step of applying the sulfonation gel (52) to the thermoplastic surface (34) within the sulfonation barrier (40; 48) is performed with the thermoplastic part (32) installed on an aircraft (20).

5. The method of claim 3 or 4, wherein the sulfonation gel (52) includes 1 percent to 6 percent fumed silica, by mass, and 90 percent to 97 percent sulfuric acid, by mass.

6. The method of claim 5, wherein the sulfonation gel (52) includes 2.5 percent to 3.5 percent fumed silica, by mass, and 90 percent to 95.5 percent sulfuric acid, by mass.

7. The method of any preceding claim, further comprising cleaning the thermoplastic surface (34), prior to forming the sulfonation barrier (40; 48) on the thermoplastic surface (34), by stripping a preexisting coating from the thermoplastic surface (34).

8. The method of claim 2 or any of claims 3 to 7 as dependent on claim 2 directly or indirectly, wherein forming the sulfonation barrier (40; 48) on the thermoplastic surface (34) further includes adhering a barrier film (50) to the sealant tape (44) to form the sulfonation barrier (40; 48) sealing a portion of the thermoplastic part (32) within the sealant tape (44) and the barrier film (50).

9. The method of claim 8, wherein applying the sulfonation fluid (52) to the portion (42) of the thermoplastic surface (34) includes exposing the thermoplastic part (32) to a sulfonation gas or a sulfonation liquid within a sulfonation chamber (54).

10. The method of any preceding claim, further comprising applying at least one coating to the portion (42) of the thermoplastic surface (34) subsequent to washing the portion (42) of the thermoplastic surface (34).

11. The method of any preceding claim, wherein the thermoplastic part (32) includes at least one metal component (38), the method further comprising applying the sealant tape (44) onto the at least one metal component (38) prior to applying the sulfonation fluid (52) to the portion of the thermoplastic surface (34).

12. The method of any preceding claim, wherein the thermoplastic part (32) includes a polyether ether ketone (PEEK), a poly ether ketone ketone (PEKK), or a poly aryl ether ketone (PAEK) thermoplastic matrix material.
